# EUROPEAN PATENT APPLICATION

(11) **EP 2 808 662 A1**
(43) Date of publication of application: **03.12.2014**
(21) Application number: 13741174.0
(22) Date of filing: 21.01.2013
(51) Int. Cl.: G01K 11/32, G02B 6/00, G02B 6/02

(54) **OPTICAL FIBER FOR TEMPERATURE SENSOR AND POWER DEVICE MONITORING SYSTEM**

(30) Priority: 23.01.2012 JP 2012011254
(71) Applicant: KABUSHIKI KAISHA TOYOTA JIDOSHOKKI, Kariya-shi, Aichi 448-8671 (JP); National University Corporation Kagawa University, Takamatsu-shi, Kagawa 760-8521 (JP); Institute of National Colleges of Technology, Japan, Hachioji-shi, Tokyo 193-0834 (JP)
(72) Inventor: IMAOKA, Ko, Kariya-shi, Aichi 448-8671 (JP); SUZAKI, Yoshifumi, Takamatsu-shi, Kagawa 761-0396 (JP); NAKAGAWA, Kiyoshi, (deceased) (JP); IWATA, Hiromu, Takamatsu-shi, Kagawa 761-8058 (JP)
(74) Representative: TBK
(86) International application number: PCT/JP2013/051069
(87) International publication number: WO 2013/111698

(57) **Abstract**

An optical fiber for a temperature sensor and a power device monitoring system that can measure temperatures at different measurement positions by a simple construction are provided. An optical fiber for the sensor 10 comprises a temperature assurance FBG 20 and temperature measurement FBGs 30 as FBGs wherein the refractive index of a core changes periodically. Wavelength band of light incident to the optical fiber for the sensor 10 includes Bragg wavelengths of the temperature assurance FBG 20 and the temperature measurement FBGs 30. The power device monitoring system 1 measures temperatures of the temperature assurance FBG 20 and the temperature measurement FBGs 30 based on their Bragg wavelengths.

## Description

### Technical Field

The present invention relates to an optical fiber for a temperature sensor and a power device monitoring system comprising the optical fiber for the temperature sensor.

### Background Art

Temperature monitoring is effective for prevention of accidents in batteries or generators. Various temperature sensors for measuring temperatures are known. For example, paragraphs [0077], [0078], etc. of Patent Document 1 describe an example of a temperature sensor using an optical fiber wherein an FBG (Fiber Bragg Grating) is formed.

Also, in order to evaluate heat generation of a device appropriately, a construction is known that provides a temperature sensor which measures ambient temperature for temperature assurance and a temperature sensor which separately measures the temperature of the device per se.

### Conventional Art Documents

### [Patent Documents]

[Patent Document 1] Japanese National Phase Publication No. 2004-506869

### Summary of the Invention

### Problems to be solved by the Invention

However, conventional constructions have problems in that they become complicated if temperatures were to be measured in a plurality of measurement positions. For example, if a plurality of temperature sensors are merely combined, each temperature sensor has to be provided with a power source, a pair of electrodes and a sensor body.

The present invention is made in order to solve the problem and is aimed at providing an optical fiber for a temperature sensor and a power device monitoring system that can perform temperature measurement in a plurality of measurement positions with a simple construction.

### Means for Solving the Problems

In order to solve the above problems, an optical fiber for a temperature sensor related to the present invention is an optical fiber for a temperature sensor utilizing FBGs wherein the refractive index of a core changes periodically along a direction in which incident light propagates, comprising:
a first FBG placed spaced apart from a power device; and
a plurality of second FBGs placed in contact with the power device, wherein
the first FBG and the second FBGs have respectively different grating periods.

According to such a construction, one optical fiber comprises a plurality of FBGs and each FBG functions as a temperature sensor in each position.

The first FBG and the second FBGs may be provided on an identical light path.

The optical fiber for the temperature sensor may further comprise:
a third FBG;
a metal layer sheathing the third FBG; and
a pair of electrodes provided at the metal layer.

Also, a power device monitoring device related to the present invention is a power device monitoring system for measuring the temperature of a power device, comprising:
the optical fiber for the temperature sensor as described above;
a light source for emitting the incident light;
light measurement means for measuring light that has transmitted through the first FBG and the second FBGs or light reflected by the first FBG or the second FBGs.

The first FBG may be placed in a position wherein the first FBG does not receive a direct thermal effect from a power line.

The incident light may have a continuous spectrum; and
the wavelength band of the incident light may include a wavelength band reflected by the first FBG and a wavelength band reflected by the second FBGs.

The light measurement means may comprise:
a filter having transmittance in a first band including a wavelength reflected by the first FBG, the transmittance varying monotonously in response to a wavelength; and
a light intensity measurement means for measuring an intensity of light that has transmitted through the filter.

The power device may comprise a plurality of component units;
the component unit may be any of a battery, a rechargeable battery, a generator and a transformer; and
at least one of said second FBGs may be provided for each component unit.

The second FBGs may all have an identical grating period.

The light measurement means may comprise light intensity measurement means for measuring intensity of light in a second band including a wavelength reflected by the second FBGs; and
the power device monitoring system may determine whether there is abnormality in the power device based on the intensity of light in the second band.

### Effect of the Invention

According to the optical fiber for a temperature sensor and the power device monitoring system of the present invention, a plurality of FBGs in one optical fiber can be placed in different measurement positions, so temperatures can be measured at a plurality of measurement positions by a simple construction.

### Brief Description of the Drawings

Fig. 1 is a diagram illustrating a construction of a power device monitoring system related to a first embodiment of the present invention.
Fig. 2 is a diagram illustrating a construction of the temperature assurance FBG of Fig. 1.
Fig. 3 is a diagram illustrating how a spectrum of transmitted light varies in response to temperature variation in the temperature assurance FBG of Fig. 2.
Fig. 4 is a diagram illustrating a construction of the temperature measurement FBG of Fig. 1.
Fig. 5 is a diagram illustrating a construction of the FBG for voltage of Fig. 1 and its surroundings.
Fig. 6 is a diagram illustrating a construction of the FBG for current of Fig. 1 and its surroundings.
Fig. 7 is a diagram illustrating a construction of the light measurement means of Fig. 1.
Fig. 8 is a diagram illustrating wavelength characteristics of the filters of Fig. 7.
Fig. 9 is a diagram illustrating examples of spectra of light that have transmitted through the filters of Fig. 7.
Fig. 10 is a diagram illustrating how a spectrum of light that has transmitted through the filter F2 of Fig. 7 varies.

### Embodiments of the Invention

Embodiments of the present invention will be explained below with reference to the attached drawings.

### First Embodiment

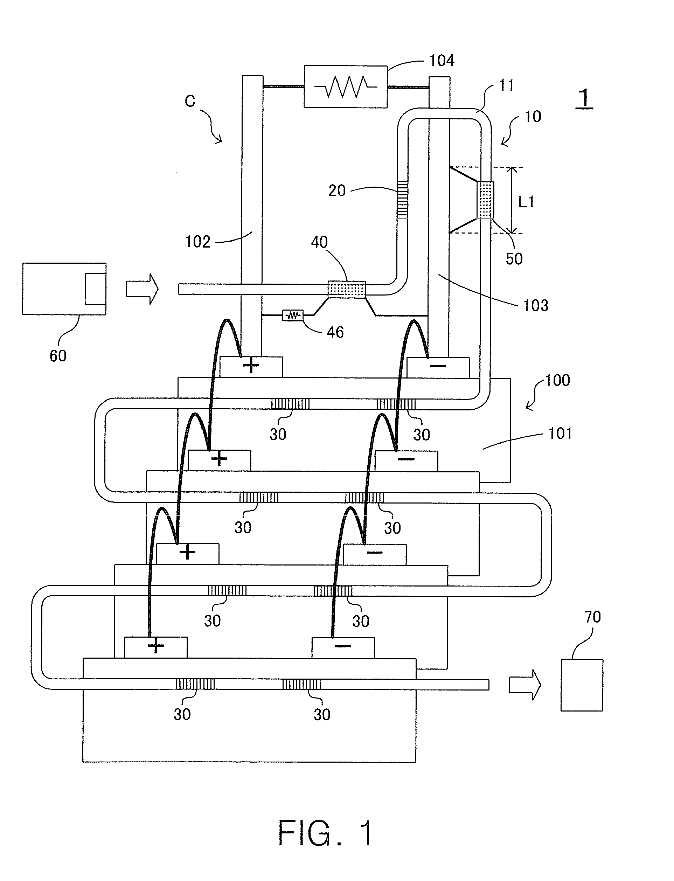

Fig. 1 is a schematic diagram illustrating a general construction of a power device monitoring system 1 related to a first embodiment of the present invention.

The power device monitoring system 1 is used in order to monitor a power device by measuring temperature, current and voltage of the power device. The power device means for example an electrical power device and includes a battery, a rechargeable battery, a generator, a transformer, etc. Also, the power device may be a high voltage electric circuit or a part thereof.

The power device monitoring system 1 comprises an optical fiber for a sensor 10, a light source 60 and light measurement means 70. In this embodiment, the optical fiber for the sensor 10 functions as an optical fiber for a temperature sensor, an optical fiber for a current sensor and an optical fiber for a voltage sensor. The light source 60 emits incident light toward the optical fiber for the sensor 10. The light source 60 is a broad wavelength light source that emits light having a continuous spectrum in a predetermined band and is constructed for example by an LED. The light measurement means 70 receives and measures the light that has transmitted through the optical fiber for the sensor 10.

The power device monitoring system 1 monitors a battery 100 as an example of a power device to be monitored. The battery 100 comprises one or more battery cells 101 as its internal component unit. The battery cells 101 are connected in parallel in this embodiment. The battery 100 comprises a cathode 102 and an anode 103. A load 104 is connected between the cathode 102 and the anode 103. Thus, the battery 100 and the load 104 constitute an electric circuit C.

The optical fiber for the sensor 10 of the power device monitoring system 1 has a construction as a known optical fiber. For example, the optical fiber for the sensor 10 comprises a core and cladding as constructions for propagating incident light toward a predetermined direction. Also, the optical fiber for the sensor 10 comprises an optical fiber portion 11 having a construction as an optical fiber and a plurality of FBGs. The refractive index of the core in the optical fiber portion 11 is supposed to be constant.

The plurality of FBGs include a temperature assurance FBG 20, temperature measurement FBGs 30, a FBG for voltage 40 and a FBG for current 50. These FBGs are all provided on an identical light path in the single optical fiber for the sensor 10. The refractive index of the core in each FBG changes periodically with a predetermined period length (i.e. a grating period) along a direction in which the incident light propagates. Accordingly, each FBG has a characteristic that it reflects light of a specific wavelength determined in response to the grating period (i.e. a Bragg wavelength) with respect to the incident light and transmits other light. Also, the optical fiber portion 11 and the FBGs are formed for example of materials such as quartz glass and have positive coefficients of thermal expansion. Further, as an example, the FBGs are formed by radiating ultraviolet light or the like on a core of an optical fiber.

The grating periods of the temperature assurance FBG 20, the temperature measurement FBGs 30, the FBG for voltage 40 and the FBG for current 50 are selected so that corresponding reflected spectra are positioned in respective wavelength bands spaced apart from each other, thereby enabling determination of which FBG the reflected light or transmitted light came from. Also, even though a plurality of temperature measurement FBGs 30 are provided, they all have the same grating period. Further, the wavelength band emitted from the light source 60 includes the wavelength bands reflected by the FBGs.

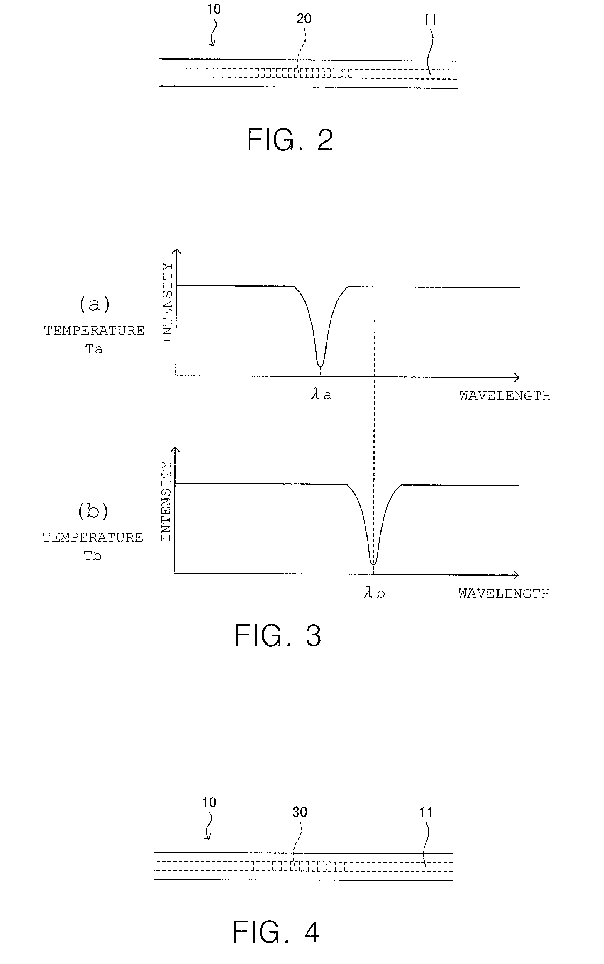

Fig. 2 illustrates a construction of the temperature assuranceFBG20. The temperature assurance FBG 20 has a construction similar to that of FBGs used as conventional temperature sensors. The temperature assurance FBG 20 is used for measuring ambient temperature and is a first FBG functioning as an environmental temperature sensor portion. The temperature assurance FBG 20 measures the environmental temperature in order to assure sensitivity of a current sensor and a voltage sensor and is placed spaced apart from the battery 100.

Fig. 3 illustrates how the spectrum of transmitted light varies in response to temperature variation in the temperature assurance FBG 20. Fig. 3(a) shows a spectrum of the transmitted light at temperature Ta and Fig. 3(b) shows a spectrum of the transmitted light at temperature Tb, wherein Ta<Tb. Note that, since an actual light source is not an ideal white light source, the spectra would not be as flat as shown in Fig. 3 and would decrease in both the long and short wavelength sides. However, the shapes shown in Fig. 3 are used herein for the sake of explanation. Here, the coefficient of linear thermal expansion of the optical fiber portion 11 is 0.012 nm per degree Celsius in the present embodiment, so this is considered to be flat in the wavelength range narrower than about 50 nm.

As shown in Fig. 3(a), wavelength λa corresponds to the Bragg wavelength at temperature Ta. Because the temperature assurance FBG 20 reflects most light having wavelength λa, light having the wavelength λa and nearby wavelengths are not transmitted by the temperature assurance FBG 20, so the spectrum of the transmitted light shows a local minimum value at wavelength λa as a result.

If the temperature of the temperature assurance FBG 20 rises from Ta to Tb, the temperature assurance FBG 20 expands in an axial direction due to thermal expansion, so the grating period also changes. The grating period is a factor for determining the Bragg wavelength of an FBG and the Bragg wavelength varies linearly with respect to the amount of variation in the grating period. In other words, if the temperature assurance FBG 20 expands, the grating period increases, and accordingly the Bragg wavelength shifts towards a longer wavelength side. On the contrary, if the temperature of the temperature assurance FBG 20 drops and the temperature assurance FBG 20 contracts, the grating period decreases, and accordingly the Bragg wavelength shifts towards a shorter wavelength side. Thus, a numerical value representing the temperature of the temperature assurance FBG 20 can be measured based on the amount by which the Bragg wavelength shifts.

If it is supposed that the Bragg wavelength shifts towards the longer wavelength side to e.g. λb in accordance with a temperature rise, as shown in Fig. 3(b), then, light having the wavelength λb and nearby wavelengths do not transmit the temperature assurance FBG 20, and the spectrum of the transmitted light shows a local minimum value at the wavelength λb as a result.

TheaboveexplanationbasedonFig.3isappliedsimilarly to the temperature measurement FBGs 30, the FBG for voltage 40 and the FBG for current 50 which are described below.

Fig. 4 illustrates a construction of the temperature measurement FBG 30. The temperature measurement FBGs 30 have a construction similar to that of an FBG used as a conventional temperature sensor. The grating period of the temperature measurement FBGs 30 differs from the gratingperiod of the temperature assurance FBG 20 as explained above. In the present specification, if grating periods are to be compared with each other, the grating periods should refer to those in an identical temperature range, although the grating periods may vary because the FBGs expand or contract depending on the temperature.

As shown in Fig. 1, a plurality of the temperature measurement FBGs 30 are provided. In this example, eight temperature measurement FBGs 30 are provided in total, including two temperature measurement FBGs 30 for each of four battery cells 101. The temperature measurement FBGs 30 are second FBGs used for measuring temperatures of the battery cells 101. The temperature measurement FBGs 30 are placed for example in contact with the battery cells 101, although the temperature measurement FBGs 30 may be located in any position where the temperatures of the battery cells 101 can be measured with a certain precision. According to such a construction, the temperature measurement FBGs 30 perform multi-point temperature measurement of the battery 100.

The plurality of temperature measurement FBGs 30 all have an identical grating period. Note that the grating periods can be regarded to be "identical" even if they differ in a precise meaning, provided that the difference does not produce any significant error in determination of the abnormalities described below.

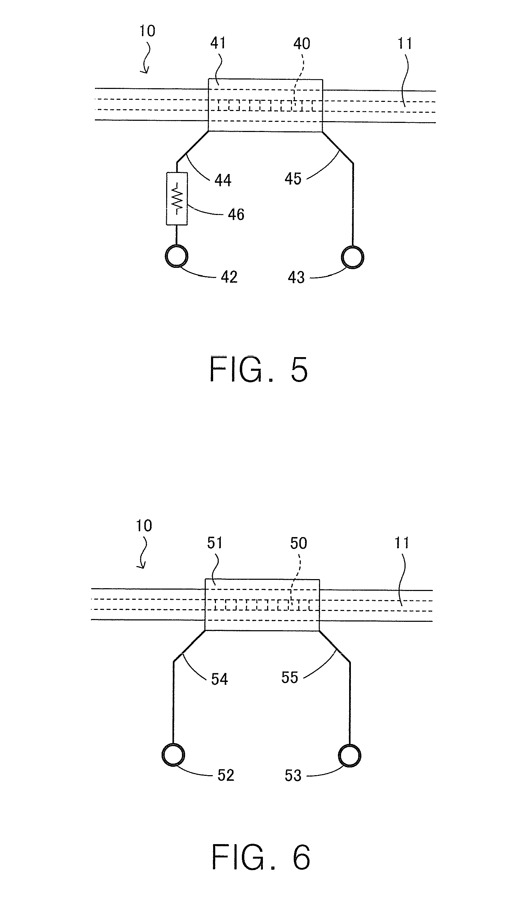

Fig. 5 illustrates a construction of the FBG for voltage 40 and its surroundings. The grating period of the FBG for voltage 40 differs from the grating periods of the temperature assurance FBG 20 and the temperature assurance FBG 20. The optical fiber for the sensor 10 comprises a metal layer 41 for sheathing the FBG for voltage 40. Also, the optical fiber for the sensor 10 comprises a pair of electrodes 42 and 43 provided at the metal layer 41. The electrodes 42 and 43 are connected to the metal layer 41 in different positions by wires 44 and 45 respectively. Further, one of the electrodes (the electrode 42 in the example of Fig. 5) is connected to a resistor 46 via the corresponding wire 44. In such a construction, a current can flow in the metal layer 41 by applying a voltage between the electrodes 42 and 43.

The metal layer 41 is a heating element including a resistive metal material having a constant resistance. For example, the metal layer 41 is constituted solely by the resistive metal material. Examples of the resistive metal material are titanium, nichrome, stainless steel, silver, etc. Also, the resistive metal material can be a material mixing titanium, nichrome or stainless steel with copper. The metal layer 41 is formed cylindrically around the external periphery of the FBG for voltage 40. The metal layer 41 does not have to sheath an entire portion of the FBG for voltage 40 completely but may sheath at least a portion of the FBG for voltage 40. Further, the metal layer 41 is for example formed on a cladding layer of the FBG for voltage 40 to sheath the cladding layer, but it does not have to sheath the clading layer directly.

In accordance with such a construction, if a current flows through the metal layer 41, the metal layer 41 produces Joule heat so that the FBG for voltage 40 is heated to expand in an axial direction by thermal stress. Also, the metal layer 41 per se expands from this Joule heat so that the metal layer 41 expands in the axial direction, and stress upon this expansion makes the FBG for voltage 40 expand in the axial direction. As a result of these effects, the FBG for voltage 40 expands in the axial direction (i.e. a direction in which light propagates) so that its length increases.

In response to variations in the length of the FBG for voltage 40, the grating period also varies so that the Bragg wavelength to be reflected by the FBG for voltage 40 also varies. Here, the amount of heat produced in the metal layer 41 is determined in response to the magnitude of the voltage applied to the metal layer 41 and the amount of heat produced in the metal layer 41 is in proportion to the heat stress exerted on the FBG for voltage 40, so the amount of variation in the Bragg wavelength (i.e. difference from a predetermined reference Bragg wavelength) would depend on the magnitude of the voltage applied to the metal layer 41.

Fig. 6 illustrates a construction of the FBG for current 50 and its surroundings. The grating period of the FBG for current 50 differs from the grating periods of the temperature assurance FBG 20, temperature measurement FBGs 30 and FBG for voltage 40. The optical fiber for the sensor 10 comprises a metal layer 51 for sheathing the FBG for current 50, in a manner similar to the FBG for voltage 40 in Fig. 5. Also, the optical fiber for the sensor 10 comprises a pair of electrodes 52 and 53 provided at the metal layer 51. The electrodes 52 and 53 are connected to the metal layer 51 in different positions by wires 54 and 55 respectively. However, in contrast to the FBG for voltage 40, no resistor is connected to the FBG for current 50.

In accordance with such a construction, if a current flows through the metal layer 51, the FBG for current 50 expands in the axial direction, and the Bragg wavelength varies because its length increases. Here, the amount of heat produced by the metal layer 51 is determined in response to the magnitude of current flowing through the metal layer 51 and the amount of heat produced by the metal layer 51 is in proportion to the heat stress exerted on the FBG for current 50, so the amount of variation in the Bragg wavelength (i.e. difference from a predetermined reference Bragg wavelength) would depend on the magnitude of the current flowing through the metal layer 51.

Thus, both the FBG for voltage 40 and the FBG for current 50 function as third FBGs for measuring electrical parameters (the voltage and the current, respectively) of the battery 100.

The metal layer 41 and the resistor 46 of the FBG for voltage 40 are connected in parallel with respect to the battery 100 in the electric circuit C as shown in Fig. 1. Also, the metal layer 51 of the FBG for current 50 is connected in series with respect to the battery 100 in the electric circuit C. Note that the temperature assurance FBG 20 and the temperature measurement FBGs 30 are independent of the electric circuit C in the present embodiment.

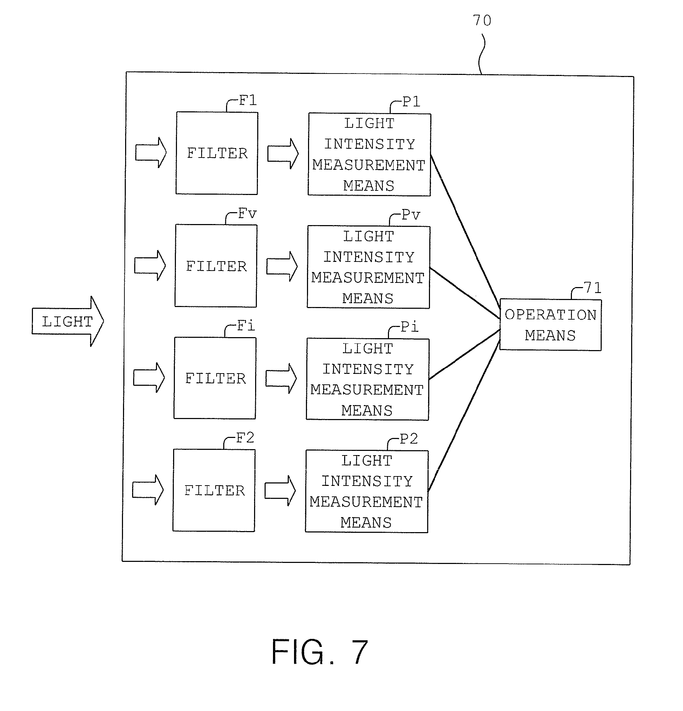

Fig. 7 illustrates a construction of the light measurement means 70 of Fig. 1. The light measurement means 70 comprises filters F1, Fv, Fi and F2 having respectively different wavelength characteristics, light intensity measurement means P1, Pv, Pi and P2 for measuring light intensities and operation means 71 for performing operations. Although the operation means 71 is a portion of the light measurement means 70 in Fig. 7, the operation means 71 may be constituted by an independent computer.

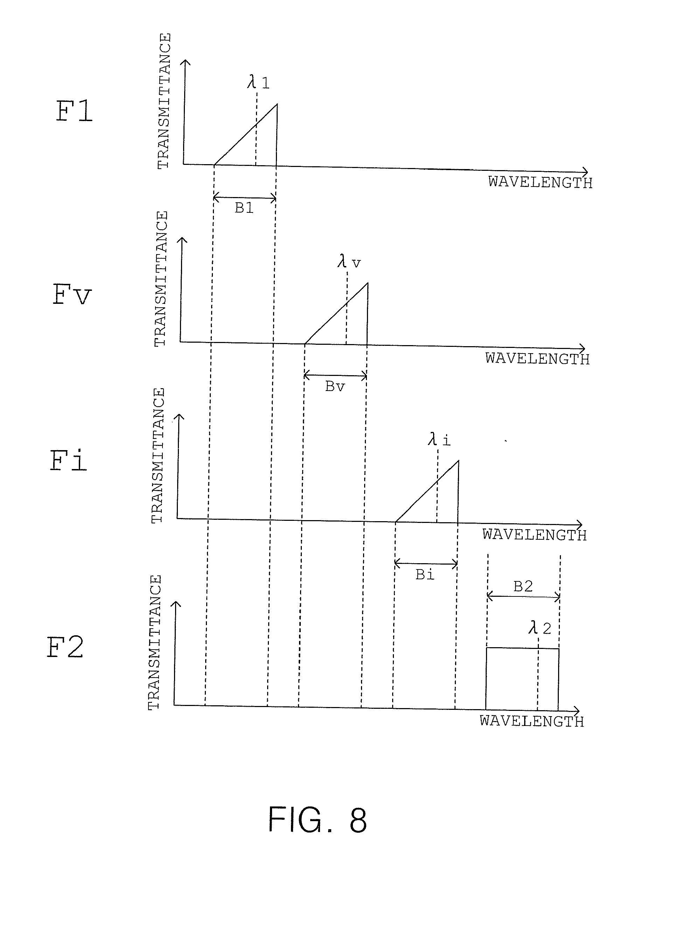

Fig. 8 illustrates respective wavelength characteristics of the filters F1, Fv, Fi and F2. The filter F1 has a positive transmittance in a band B1 (a first band) and blocks the wavelengths out of the band B1. Transmittance in the band B1 varies monotonously in response to the wavelength. In the example of Fig. 8, the transmittance increases linearly as the wavelength increases. Also, the band B1 is a band including the Bragg wavelength λ1 of the temperature assurance FBG 20 (the first wavelength). Although the Bragg wavelength λ1 varies in response to the temperature, the band B1 contains the range wherein the Bragg wavelength λ1 varies corresponding to a predetermined temperature range wherein the power device monitoring system 1 should perform temperature measurement.

The filter Fv has a positive transmittance in a band Bv and blocks those wavelengths out of the band Bv. Transmittance in the band Bv varies monotonously in response to the wavelength. In the example of Fig. 8, the transmittance increases linearly as the wavelength increases. Also, the band Bv is a band including the Bragg wavelength λv of the FBG for voltage 40. Although the Bragg wavelength λv varies in response to the temperature, the band Bv contains the range wherein the Bragg wavelength λv varies corresponding to a temperature range wherein the power device monitoring system 1 should perform temperature measurement and corresponding to a predetermined voltage range wherein the power device monitoring system 1 should perform voltage measurement.

The filter Fi has a positive transmittance in a band Bi and blocks those wavelengths out of the band Bi. Transmittance in the band Bi varies monotonously in response to the wavelength. In the example of Fig. 8, the transmittance increases linearly as the wavelength increases. Also, the band Bi is a band including the Bragg wavelength λi of the FBG for current 50. Although the Bragg wavelength λi varies in response to the temperature, the band Bi contains the range wherein the Bragg wavelength λi varies corresponding to a temperature range wherein the power device monitoring system 1 should perform temperature measurement and corresponding to a predetermined current range wherein the power device monitoring system 1 should perform current measurement.

The filter F2 has a constant transmittance (ideally 100% for example) in a band B2 (a second band) and blocks those wavelengths out of the band B2. The band B2 is a band including the Bragg wavelength λ2 of the temperature measurement FBGs 30 (the second wavelength). Although the Bragg wavelength λ2 varies in response to the temperature, the band B2 contains the range wherein the Bragg wavelength λ2 varies corresponding to a temperature range wherein the power device monitoring system 1 should perform temperature measurement.

Also, the light source 60 has a flat spectrum over the bands B1, Bv, Bi and B2. The wavelength range of light emitted from the light source in the present invention is up to 100 nm. The light emitted from the light source may be white light.

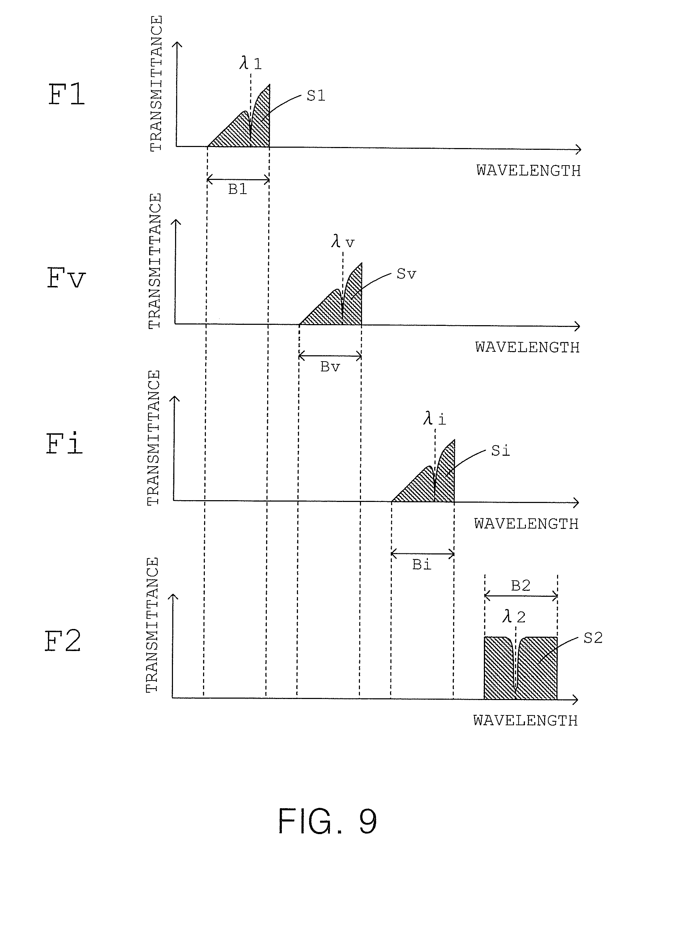

Fig. 9 illustrates examples of spectra of light that has transmitted through the filters F1, Fv, Fi and F2 respectively. Due to reflection in the temperature assurance FBG 20, temperature measurement FBGs 30, FBG for voltage 40 and FBG for current 50, local minimum values appear in corresponding Bragg wavelengths λ1, λv, λi and λ2. Note that reflection spectra of the FBGs are spaced apart from each other. Intensity of light included in the band B1 is an integral of the intensity of light with respect to wavelength within the Band B1 and is represented by an area S1. Similarly, intensities of light included in the bands Bv, Bi and B2 are represented by areas Sv, Si and S2 respectively.

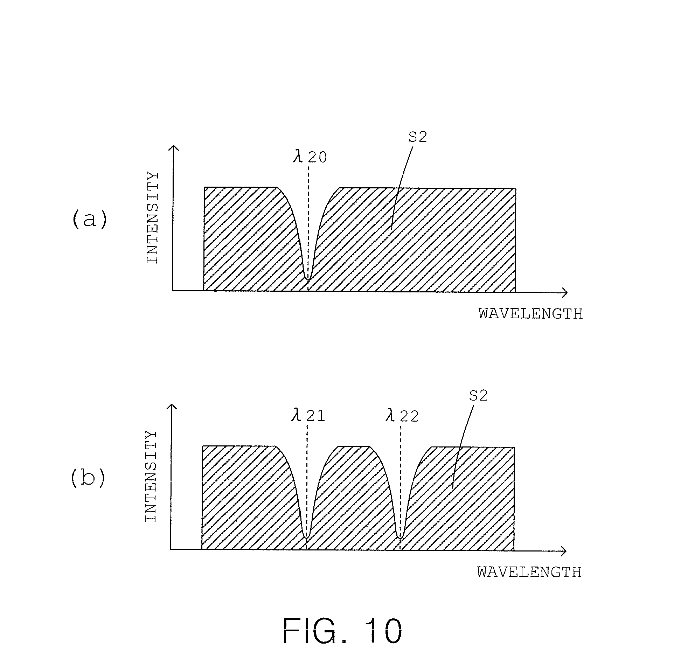

Fig. 10 illustrates how a spectrum of light that has transmitted through the filter F2 varies. Fig. 10 (a) shows an example wherein the temperature of the battery 100 is uniform. Temperatures of the eight temperature measurement FBGs 30 are all equal, so their grating periods are also equal and only one local minimum value appears corresponding to a Bragg wavelength λ20.

Fig. 10 (b) shows an example wherein the temperature of the battery 100 is not uniform. A local minimum value corresponding to a Bragg wavelength λ21 of a temperature measurement FBG 30 at a position where the temperature is comparatively low and a local minimum value corresponding to a Bragg wavelength λ22 of a temperature measurement FBG 30 at a position where the temperature is comparatively high appear separately.

The light intensity measurement means P1, Pv, Pi and P2 transform the intensity of light into electrical signals. They can be constructed by using known MOSs or CCDs.

The light intensity measurement means P1 measures the intensity of light that has transmitted through the filter F1 (i.e. light included in the band B1). In other words, the light intensity measurement means P1 measures the area S1 in Fig. 9. Here, the area S1 has different values in response to the Bragg wavelength λ1. That is, due to the wavelength characteristics of the filter F1, a shorter Bragg wavelength λ1 would have less effect on the area S1 around the local minimum value, making the area S1 larger, whereas a longer Bragg wavelength λ1 would have a greater effect on the area S1 around the local minimum value, making the area S1 smaller.

The light intensity measurement means P1 communicates the measured intensity of the light, i.e. the area S1, to the operation means 71. The light intensity measurement means Pv, Pi and P2 also measure the intensities of the light that have transmitted through the filters Fv, Fi and F2, i.e. the areas Sv, Si and s2, respectively, and communicates them to the operation means 71.

The operation means 71 monitors the battery 100 based on the signals received from the light intensity measurement means P1, Pv, Pi and P2.

The operation means 71 measures an environmental temperature T0 around the battery 100 measured by the temperature assurance FBG 20 based on the area S1. The temperature can be calculated based on the area S1 because, as described above, the Bragg wavelength λ1 varies in response to the temperature of the temperature assurance FBG 20 and the area S1 varies in response to the Bragg wavelength λ1. This is performed by, for example, storing an equation representing the relationship between the temperature and the area S1 beforehand and assigning the S1 to the equation.

Also, the operation means 71 measures the voltage between the electrodes of the battery 100 measured by the FBG for voltage 40 based on the area Sv. The voltage can be calculated based on the area Sv because, as described above, the temperature of the FBG for voltage 40 varies in response to the environmental temperature T0 and the voltage applied to the metal layer 41 of the FBG for voltage 40, the Bragg wavelength λv varies in response to the temperature of the FBG for voltage 40 and the area Sv varies depending on the Bragg wavelength λv. As an example of the calculation method, an area difference may be calculated between the area Sv corresponding to the FBG for voltage 40 and the area S1 corresponding to the temperature assurance FBG 20 and the voltage may be calculated based on the area difference.

Thus, the power device monitoring system 1 measures the voltage value of the battery 100.

Also, the operation means 71 measures the current between the electrodes of the battery 100 (i.e. the current flowing through the electrical circuit C) measured by the FBG for current 50 based on the area Si. The current can be calculated based on the area Si because, as described above, the temperature of the FBG for current 50 varies in response to the environmental temperature T0 and the current flowing through the metal layer 51 of the FBG for current 50 and the Bragg wavelength λi varies depending on the temperature of the FBG for current 50 and the area Si varies in response to the Bragg wavelength λi. As an example of the calculation method, an area difference may be calculated between the area Si corresponding to the FBG for current 50 and the area S1 corresponding to the temperature assurance FBG 20 and the current may be calculated based on the area difference.

Thus, the power device monitoring system 1 measures the current value of the battery 100.

Also, the operation means 71 determines whether there is any abnormality regarding temperature in the battery 100 based on the area S2. For example, it is determined that there is an abnormality if the area S2 is equal to or greater than a predetermined threshold and otherwise it is determined that there is no abnormality. As shown in Fig. 10, the area S2 in the case of Fig. 10 (a) wherein there is a single local minimum value is greater than the area S2 in the case of Fig. 10 (b) wherein a plurality of local minimum values appear. Accordingly, if the area S2 is small, the Bragg wavelength of at least one temperature measurement FBG 30 is considered to be different from the Bragg wavelengths of other temperature measurement FBGs 30, so excessive heating in a portion of the battery 100 is considered to be highly probable. Thus, the excessive heating can be detected appropriately by determining abnormality based on the area S2.

As described above, the power device monitoring system 1 related to the first embodiment of the present invention can perform temperature measurements at a plurality of measurement positions with a simplified wiring because it provides the single optical fiber for the sensor 10 with the temperature assurance FBG 20 and the temperature measurement FBGs 30. Accordingly, effects of environmental temperature can be compensated for by measuring the temperature of the battery 100 using the temperature measurement FBGs 30 and measuring the environmental temperature using the temperature assurance FBG 20. In particular, critical accidents can be effectively reduced by more effectively detecting abnormal heating upon charging or discharging.

Further, in addition to the temperature assurance FBG 20 and the temperature measurement FBGs 30, the single optical fiber for the sensor 10 is provided with the FBG for voltage 40 and the FBG for current 50, so the temperature, the voltage and the current can be measured concurrently by a simple construction, enabling a comprehensive monitoring. In particular, monitoring the charged and discharged amounts for a chargeable and dischargeable secondary battery is important for extending life of the secondary battery.

Also, the light intensity measurement means P1, Pv, Pi and P2 only have to measure the total intensities of the light included in the corresponding wavelength bands and do not have to comprise any kind of spectroscope for measuring the detailed spectrum distribution, which makes the construction simple. However, it is also possible to use spectroscopes instead of the filters F1, Fv, Fi and F2, in which case they can be omitted.

Also, no current flows in or around the temperature assurance FBG 20 and the temperature measurement FBGs 30, so their own temperatures do not vary between when the power device monitoring system 1 is operating and when it is not. That is, no workload is required for warming up the temperature assurance FBG 20 or stabilizing the temperature assurance FBG 20 with respect to the environmental temperature. Further, variation of the Bragg wavelengths in the FBGs and their measurements are optical factors and not under electromagnetic interference, so the measurements can be performed with a high S/N ratio without any electromagnetic noise.

Also, the wavelength corresponding to the environmental temperature (the Bragg wavelength λ1), the wavelength corresponding to the temperature of the object to be monitored (the Bragg wavelength λ2) and the wavelengths corresponding to the current and the current (the Bragg wavelengths λi and λv) are measured based on variation in the Bragg wavelengths of the FBGs, i.e. based on the same physical principle, so their error compensation can be more precise.

The following modifications can be made on the above first embodiment.

In the first embodiment, the light measurement means 70 measures the temperature, the current and/or the voltage based on the light that has transmitted through the FBGs. In an alternative embodiment, a light processing device may measure the current or the voltage based on the light reflected by the FBGs. In this case, the light measurement means would be provided at the incident side of the optical fiber for the sensor to measure the spectra reflected by the FBGs. Further, the Bragg wavelengths would be identified as the wavelengths giving local maximum values in the measured spectra and the abnormality determination would also be performed based on the local maximum values.

The FBG for voltage 40, the FBG for current 50 or both of them can be omitted. In particular, if the FBG for voltage 40 is omitted, a standby current of the battery 100 can be reduced. Such a construction is effective for a monitoring system for a vehicle battery.

Although component units of the battery 100 are the battery cells 101 in the first embodiment, they may be rechargeable batteries, generators, transformers, etc. Further, different types of component units may be included.

Regarding the positional relationship between the temperature assurance FBG 20 and the temperature measurement FBG 30, in Fig. 1, the temperature assurance FBG 20 is placed in a position distant from the battery 100 and the temperature measurement FBGs 30 are placed in contact with one of the battery cells 101 included in the battery 100. In order to precisely compensate for the environmental temperature of the FBG for voltage 40 and FBG for current 50, it is desirable to have a positional relationship where the temperature assurance FBG 20 is placed in the proximity of the FBG for voltage 40 and the FBG for current 50 and the temperature assurance FBG 20 does not receive any direct thermal effect from power lines or the like.

Alternatively, the placement may be so that effects on the measured values of the temperature assurance FBG 20 due to the temperature of the battery 100 are smaller than effects on the measured values of the temperature measurement FBGs 30. For example, the positional relationship may be sufficient if the distance between the temperature assurance FBG 20 and the battery 100 is greater than the distance between the temperature measurement FBGs 30 and the battery 100 (or the distance between each temperature measurement FBG 30 and respective nearest battery cell 101).

In the first embodiment, two temperature measurement FBGs 30 are provided for each battery cell 101 which is the component unit of the battery 100. In an alternative embodiment, providing at least one temperature measurement FBG 30 for each component unit is sufficient. Further, in the case where temperature measurement is not required for each component unit, providing at least one temperature measurement FBG 30 for the entire battery 100 is sufficient.

## Claims

1. An optical fiber for a temperature sensor utilizing Fiber Bragg Gratings (FBGs) wherein a refractive index of a core changes periodically along a direction in which incident light propagates, comprising:
a first FBG spaced apart from a power device; and
a plurality of second FBGs placed in contact with the power device, wherein
the first FBG and the second FBGs have respectively different grating periods.

2. The optical fiber for the temperature sensor of Claim 1, wherein the first FBG and the second FBGs are provided on an identical light path.

3. The optical fiber for the temperature sensor of Claim 1, wherein the optical fiber for the temperature sensor further comprises:
a third FBG;
a metal layer sheathing the third FBG; and
a pair of electrodes provided at the metal layer.

4. A power device monitoring system for measuring a temperature of a power device, comprising:
the optical fiber for the temperature sensor of Claim 1;
a light source for emitting the incident light;
a light measurement means for measuring light that has transmitted through the first FBG and the second FBGs or light reflected by the first FBG or the second FBGs.

5. The power device monitoring system of Claim 4, wherein the first FBG is placed in a position wherein the first FBG does not receive a direct thermal effect from a power line.

6. The power device monitoring system of Claim 4, wherein:
the incident light has a continuous spectrum; and
a wavelength band of the incident light includes a wavelength band reflected by the first FBG and a wavelength band reflected by the second FBGs.

7. The power device monitoring system of Claim 4, wherein the light measurement means comprises:
a filter having transmittance in a first band including a wavelength reflected by the first FBG, the transmittance varying monotonously in response to a wavelength; and
a light intensity measurement means for measuring an intensity of light that has transmitted through the filter.

8. The power device monitoring system of Claim 4, wherein:
the power device comprises a plurality of component units;
the component unit being any of a battery, a rechargeable battery, a generator and a transformer; and
at least one of said second FBGs is provided for each component unit.

9. The power device monitoring system of Claim 8, wherein the second FBGs all have an identical grating period.

10. The power device monitoring system of Claim 8, wherein:
the light measurement means comprises light intensity measurement means for measuring intensity of light in a second band including a wavelength reflected by the second FBGs; and
the power device monitoring system determines whether there is abnormality in the power device based on the intensity of light in the second band.
